(19) Europäisches Patentamt
European Patent Office
Office européen des brevets

(11) **EP 1 742 382 A2**

(12) **EUROPEAN PATENT APPLICATION**

(43) Date of publication:
**10.01.2007 Bulletin 2007/02**

(51) Int Cl.:
***H04B 7/04*** (2006.01)

(21) Application number: **06014073.8**

(22) Date of filing: **06.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.07.2005 CN 200510082652**

(71) Applicant: **NTT DoCoMo Inc.**
**Chiyoda-ku**
**Tokyo 100-6150 (JP)**

(72) Inventors:
• **Pan, Zhengang**
**7/F Raycom Infotech Park Tower A**
**Haidian District**
**Beijing, 100080 (CN)**
• **Chen, Lan**
**7/F, Raycom Infotech Park Tower A**
**Haidian District**
**Beijing, 100080 (CN)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(54) **MIMO communication system and user scheduling method**

(57) The present invention relates to a MIMO communication system and its user scheduling method. The said MIMO communication system includes: a transmitter that is configured to transmit the data frame including at least the channel estimation signal and the user data; and a receiver that is configured to receive the data frame from the transmitter and to produce the corresponding feedback information according to the channel fading matrix between the transmitter and the receiver and to recover the user data. The said method includes the following steps: (a) the receiver produces the feedback information according to the channel fading condition between the transmit antenna and the receiving antenna and feeds back the said feedback information to the transmitter; (b) the transmitter receives the said feedback information, produces the scheduling information according to the said feedback information and schedules the user according to the said scheduling information. The present invention can change the user scheduling information at real time according to the change of the channel condition so as to obtain higher system capacity.

Fig. 1

## Description

Field of the Invention

The present invention relates to a MIMO communication system and its user scheduling method, especially the MIMO communication system and user scheduling method based on antenna selection/beamforming and adaptive/half-adaptive user scheduling.

Background

The future wireless communication system is required to support the extremely high speed data traffics, such as the videoconference, the video-on-demand and the interactive video game, etc.. As defined in ITU-R M1645, it should support up to 100Mbps for high mobility traffics and up to 1Gbps for low mobility or fixed wireless traffics.

The data rate of one wireless channel equals to the product of its spectrum width and the spectrum efficiency of the adopted technology. In order to improve the data rate, the spectrum width of the channel or the spectrum efficiency of the adopted technology should be improved. However, since the frequency resource is limited, the communication speed cannot be raised by infinitely increasing the spectrum width. Improving the spectrum efficiency of the adopted technology is an optimal solution.

There are generally two methods to improve the spectrum efficiency. One is by the physical layer technologies such as advanced coding technologies and signal processing technologies etc. to improve the link level spectrum efficiency and the other is by high layer control to realize more flexible resource allocation to improve the system level spectrum efficiency.

MIMO technology and Channel-Aware User Scheduling are the corresponding two promising methods to realize the said aims. How to combine these two methods to further enhance the spectrum efficiency is an attractive project.

In a MIMO system, all the users compete for the common system resource. User scheduling is performed according to the user's channel condition. In a multiantenna system, the channel condition is directly associated with the space signal processing method. Specificlly, each user can obtain enough accurate channel information by channel estimation; then all or part of the information is fed back to the base station according to the feedback channel bandwidth. The base station will perform different user scheduling methods according to the amount of the feedback information. Finally, the data of the scheduled user will be used to perform the space signal processing by the base station and then the processing result will be transmitted from the transmit antenna.

The previous researches show MIMO system can only work well enough by appropriate space signal processing. Unappropriate use of space resource may result in the performance of the multiantenna system being worse than that of the single antenna system. The current existing methods prove that transmit antenna selection and random beamforming are effective space processing methods in multiuser scheduling. As to the detailed description, please refer to the following references [1]-[4].

[1] D. J. Mazzarese and W. A. Krzymien, [2003], "High throughput downlink cellular packet data access with multiple antennas and multiuser diversity" ;

[2] D. Aktas and H. E. Gamal, [2003], "Multiuser scheduling for MIMO wireless systems" ;

[3] P. Viswanath, D. N. C. Tse and R. Laroia, "Opportunistic beamforming using dumb Anntennas," IEEE Trans. Infor. Theory, Vol. 48, No. 6, pp. 1277-1294. June. 2002 ;

[4] R. Laroia, J. Li, S. Rangan and M. Srinivasan, "Enhanced Opportunistic beamforming," IEEE VTC2003-Fall, Vol. 3, PP. 1762-1766, OCT. 2003.

Wherein the antenna selection method can provide an advantegeous selective diversity for multiuser scheduling. The random beamforming can improve the system performance by purposely building a communication channel environment good for multiuser scheduling. The random beamforming is especially useful in deteriorating channels such as when line of sight and slow fading exist.

References [1]-[4] disclose two available scheduling methods aiming at different number of users scheduled. Different scheduling methods require for different amount of feedback channel information and provide different system performance.

1. The above references [1], [3] and [4] mention the scheduling method for fixed number of users. In references [1] and [4], the number of users to be scheduled in every slot is always the same as the number of transmit antennas (suppose to be $n_T$); in reference [3], the number of users to be scheduled in every slot is always equal to 1.

2. The above reference [2] mentions the scheduling method for adjustable number of users. In this method, the number of users scheduled in every slot is the same, which is supposed to be L. The value of L is a variable between 1 and $n_T$. It should be noted L is a fixed parameter in the system. The scheduling method itself is not capable of getting the optimal number of users to be scheduled according to the current channel condition.

The comparison result of the above two methods shows the scheduling method for adjustable number of users can achieve the best system performance and of course the feedback information needed is more. The performance of method for fixed number of users is the worst and the feedback information needed is less.

However, the above two methods both have disadvantages. Since the scheduling method for fixed number of users always schedules $n_T$ users and when the interference between users exists and the interference is serious or the channel condition is bad, it is difficult to obtain high system capacity; since the number of users scheduled by the method for adjustable number of user is the fixed L, it has the same problem as that in the method for fixed number of users when in the serious interference and bad channel condition. There are many factors influencing the optimal L, including the number of transmit antennas, the number of system users and transmit power, etc.. Since these factors are always in changing, the assignment of any value to L will cause the loss of system performance because of mismatching.

The common disadvantage of the above two methods is that they cannot adjust the number of users to be scheduled according to the channel condition, thus cannot achieve high system capacity.

Brief Summery of the Invention

The present invention aims to provide a MIMO communication system, which can adjust the number of users to be scheduled according to the channel condition and achieve high system capacity.

Another aim of the present invention is to provide a user scheduling method for MIMO conmmunication system, which can adjust the number of users to be scheduled according to the channel condition and achieve high system capacity.

According to the first aspect of the present invention, a MIMO communication system is provided, including a transmitter that is configured to transmit the data frame including at least the channel estimation signal and the user data; and a receiver that is configured to receive the data frame from the transmitter and to produce the corresponding feedback signal and recover the user data. Wherein the transmitter includes: a duplexer group and the corresponding mounted transmiting antennas, which are used to transmit the data frames and to receive the feedback information from the receiver; a MIMO scheduler, which is used to produce scheduling information according to the user feedback information; and a MIMO data processor, which is used to perform space time signal processing for the user data according to the scheduling information. The said receiver includes: a duplexer group and the corresponding mounted transmitting antennas that are used to receive data frames and to transmit user feedback signals; a received signal processor which is used to produce the feedback information of the user and to recover the user data according to the channel fading matrix between the transmitter and the receiver; and a feedback information processor which is used to convert the feedback information of the user into the corresponding feedback signal.

Accroding to the second aspect of the present invention, a user scheduling method of the MIMO communication system is provided and the said method includes the following steps: (a) the receiver produces the feedback information according to the channel fading condition between the transmit antenna and the receiving antenna and feeds back the said feedback information to the transmitter; (b) the transmitter receives the said feedback information, produces the scheduling information according to the said feedback information and schedules the user according to the said scheduling information;

Wherein the said feedback information may include the group of the best transmit antennas of the said receiver, the channel capacity provided by each antenna in the said group of antennas to the said receiver and the degradation factors caused by each unselected transmit antenna to each in the group of the best transmit antennas; the said scheduling information includes the scheduled users, data streams that should be supported by each scheduled user and the transmit antenna adopted to transmit the data of the scheduled user.

Wherein the said feedback information may further include the group of best transmit beams for the said receiver, the equivalent channel gain of each transmit beam in the said group, the degradation factors caused by each transmit beam in the unselected group of transmit beams to the best transmit beam; the said scheduling information includes the scheduled users, data streams that should be supported by each scheduled user and the transmit beam adopted to transmit each data stream.

Wherein, the said feedback signal may further include the group of the best transmit antennas of the said receiver and the signal-to-interference ratio (SIR) corresponding to each transmit antenna in the said group of the best transmit beams, the group of transmit antennas that are with lowest interference to each receiver; the said scheduling information includes the scheduled users, data streams that should be supported by each scheduled user and the transmit antenna adopted to transmit the data of the scheduled user.

In addition, the said feedback signal may further include the group of the best transmit beams of the said receiver, the signal-to-interference ratio (SIR) corresponding to each transmit beam in the said group of the best transmit beams and the group of transmit beams that are with lowest interference to each receiver; the said scheduling information includes the scheduled users, data streams that should be supported by each scheduled user and the transmit beam adopted to transmit the data of the scheduled user.

Compared with the current technologies, the present MIMO communication system adopts the system architecture and scheduling method corresponding to the adaptive and half adaptive scheduling so that it can perform user scheduling according to the actual channel condition and thus improve the system capacity of the MIMO communication system. In addition, since the half adaptive scheduling is adopted, the amount of feedback information is reduced and the system resource is saved while the system capacity is improved.

Brief Description of the Drawings

Figure 1 is a block diagram of the MIMO communication system of the first embodiment of the present invention.

Figure 2 is a flow diagram showing the scheduling of the MIMO communication system of Figure 1.

Figure 3 is a schematic diagram showing the frame adopted in the MIMO communication system of the first embodiment of the present invention.

Figure 4 is a schematic diagram showing the architecture of the transmitter 10 of the MIMO communication system of the first embodiment of the present invention.

Figure 5 is a schematic diagram showing the architecture of the transmit RF link group of the transmitter 10 of the MIMO communication system of the first embodiment of the present invention.

Figure 6 is a schematic diagram showing the architecture of the duplexer group 130 of the transmitter 10 of the MIMO communication system of the first embodiment of the present invention.

Figure 7 is a schematic diagram showing the architecture of the receiver 20 of the MIMO communication system of the first embodiment of the present invention.

Figure 8 is a flow diagram showing the selection of the user to be scheduled according to the feedback information.

Figure 9 is a schematic diagram showing the architecture of the transmitter 10 of the MIMO communication system of the second embodiment of the present invention.

Figure 10 is a diagram showing the architecture of the beamformer 314 of Figure 9.

Figure 11 is a schematic diagram showing the architecture of the scheduler of the MIMO communication system of the third embodiment of the present invention.

Figure 12 is a flow diagram showing the switch of the scheduling state in the third embodiment of the present invention.

Figure 13 is an example of the switch of the scheduling state in the third embodiment of the present invention.

Detailed Description of the Invention

Next the MIMO communication system and its user scheduling method of the present invention will be described with reference to the drawings. The MIMO communication system of the present invention includes adaptive scheduling MIMO communication system and half adaptive scheduling MIMO communication system. Then these two types of MIMO communication system and their user scheduling method will be illustrated respectively.

<adaptive scheduling MIMO communication system>

In the adaptive scheduling MIMO communication system of the present invention, the one with antenna selection and the one with beamforming will be illustrated respectively.

the first embodiment

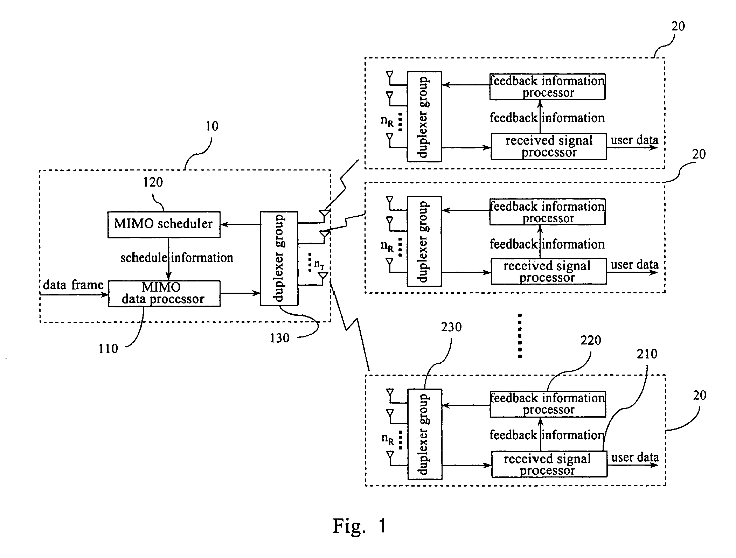

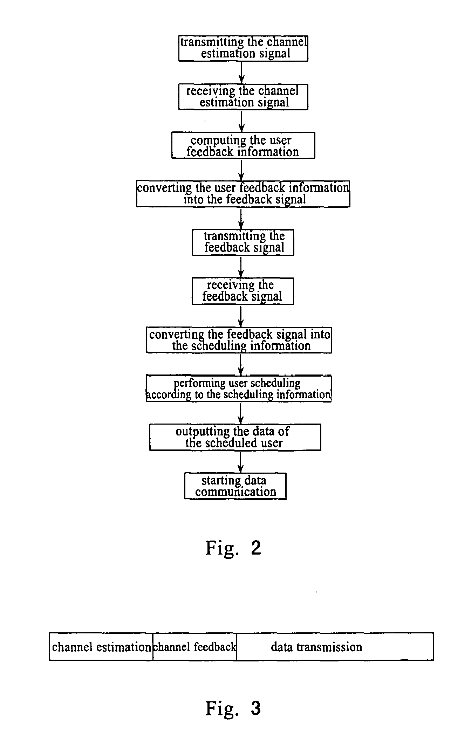

Figure 1 is a block diagram of the adaptive scheduling MIMO communication system based on the antenna selection, wherein, the said adaptive scheduling MIMO communication system includes a transmitter 10 (base station) and a plurality of receivers 20 (users). Figure 2 is a flow diagram showing the adaptive scheduling of the MIMO communication system of Figure 1. Figure 3 is a schematic diagram showing the structure of the frame adopted in the said MIMO communication system.

Figure 1-3 show the transmitter 10 includes a MIMO data processor 110, a MIMO scheduler 120, a duplexer group 130 and $n_T$ transmit antennas. Every receiver 20 includes a received signal processor 210, a feedback information processor 220, a duplexer group 230 and $n_T$ receiving antennas. Wherein, the number of receiving antennas of each receiver 20 can be different. The architecture of the said frame includes: a channel estimation slot, a channel feedback slot and a data transmit slot. Other slots can be set according to the system requirement. It is simplified here for the prupose of illustration.

scheduling information obtaining process

Figure 3 shows that before the transmitter 10 transmits the user data signal, it will transmit the channel estimation signal to the receiver 20 in the form of transmit beams from $n_T$ transmit antennas through the duplexer group 130. Every antenna will transmit the same channel estimation signal and the said channel estimation signal can be transmitted in the form of multiplexing according to the current technologies.

Suppose the transmit signal of the transmitter 10 is a $n_T$ dimension complex vector $\mathbf{x} \in C^{n_T}$, the signal received by each receiver is a $n_R$ dimension complex vector $\mathbf{y}_k \in C^{n_R}$ and there is a $n_R \times n_T$ dimension channel fading matrix between the transmitter 10 and the receiver 20:

$$\mathbf{H}_k = [\mathbf{h}_1^k,...,\mathbf{h}_{n_T}^k] = \begin{bmatrix} h_{1,1}^k & h_{1,2}^k & \cdots & h_{1,n_T}^k \\ h_{2,1}^k & h_{2,2}^k & & \\ \vdots & & \ddots & \vdots \\ h_{n_R,1}^k & & \cdots & h_{n_R,n_T}^k \end{bmatrix} \tag{1}$$

Wherein, $h_{i,j}^k$ represents the channel transmit characteristic between the $i^{th}$ transmit antenna of the transmitter 10 and the $j^{th}$ receiving antenna of the receiver 20 ($k$ represents the $k^{th}$ user).

And the transfer function of the system can be represented as:

$$\mathbf{y}_k = \mathbf{H}_k \mathbf{x}_k + \mathbf{\mu}_k$$
$$k = 1,...,K \tag{2}$$

Wherein $\mu_k \in C^{n_T}$ is a $n_R$ dimension complex vector standing for the white noise of the receiver 20.

Thus, every receiver 20 knows the exact channel fading condition. Each receiver 20 can process the channel fading condition through the received signal processor 210 to obtain the following information,

(1) Selecting a best group of transmit antennas $AnI_k$ for the said receiver 20 among all the $n_T$ transmit antennas, the number of the transmit antennas in the selected group of transmit antennas $AnI_k$ is the same as that of the receiving antennas of the said receiver 20.

(2) Then, computing the channel capacity $R_{AnI_k}$ provided by each antenna in the group of transmit antennas $AnI_k$ to the said receiver 20, one computing method is:

$$R_j = \log\det(\mathbf{I}_{n_{R_k}} + \frac{p}{n_{R_k}}\mathbf{h}_j\mathbf{h}_j^*) \quad j \in AnI_k \tag{3}$$

Wherein, $\mathbf{I}_{n_{Rk}}$ stands for a $n_R$-order positive definite matrix and $p$ stands for power.

Thus, the channel capacity $R_{AnI_k}$ provided by each antenna in the group of transmit antennas $AnI_k$ is $R_{AnI_k}$. The above is one possible computing method but should not be limited to.

(3) the received signal processor 210 will compute the the degradation factors $Df$ caused by each unselected transmit antenna among the $n_T$ transmit antennas to each in the group of the selected transmit antennas $AnI_k$. For example:

$$Df_{k,i} = \log\det(\mathbf{I}_{n_{R_k}} + \frac{p}{n_{R_k}}\mathbf{H}_{AnI_k}\mathbf{H}_{AnI_k}^*(\mathbf{I} + \frac{p}{n_{R_k}}\mathbf{h}_i\mathbf{h}_i^*)^{-1}) \quad i \in null(AnI_k) \tag{4}$$

The received signal processor 210 transmits the above processed information to the information processor 220 as the user feedback information. The said feedback information includes: the group of the best transmit antennas $AnI_k$, the channel capacity provided by each antenna in the said group of antennas $AnI_k$ to the said receiver 20 and the degradation factors $Df_{k,i}$ caused by each unselected transmit antenna to each in the group of the best transmit antennas $AnI_k$.

The feedback information processor 220 processes the received user information and converts it into the feedback signal (RF signal) suitable for the MIMO communication system. The said feedback signal is fed back to the transmitter 10 through the feedback channel and the antenna of the receiver 20.

After receiving the said feedback signal, the antenna of transmitter 10 delivers the signal to the MIMO scheduler 120. The MIMO scheduler 120 produces scheduling information according to the said signal and controls the operation of the MIMO data processor 110 according to the scheduling information. In this way, the MIMO communication system gets to the scheduling condition of the maximum capacity, i.e. the optimal user scheduling is achieved according to the scheduling information. The said scheduling information includes the scheduled users, data streams that should be supported by each scheduled user and the transmit antenna adopted to transmit the data of the scheduled user.

Further, when the users to be scheduled at that time, the data streams and transmit antennas for each user are specified, the MIMO data processor 110 will process the user data according to the scheduling information and transmit the result to the selected user from the transmit antenna.

Thus, the said MIMO communication system includes the following characteristics:

1) The number of the transmit antennas required by each receiver 20 can be the same as that of the receiving antennas;

2) What fed by each receiver 20 are: the best group of antennas, the absolute channel capacity provided by the selected antenna and the degradation factors caused by each of the unselected antennas to each antenna of the selected group of antennas. The algorithm complexity in selecting antennas can be reduced and the number of the users to be scheduled need not be known priorly, and at the same time, the absolute channel capacity is not influenced by the number of users scheduled later.

3) For each transmitter 10, the number of the users can be scheduled depends on the current channel condition and need not be pre-specified.

Thus, the said MIMO communication system can realize adaptive user scheduling so that the intelligence of the system control and communication stability can be improved to approach the maximum system capacity.

The above method to obtain the channel fading condition uses the channel estimation signal (i.e. the pilot signal), which inserts the channel estimation signal in the data frame. The receiver 20 obtains the channel fading condition between the transmitter 10 and the receiver 20 according to the said channel estimation signal and the received signal processor 210 further processes the channel fading condition to obtain the user feedback information.

However, channel blind estimation method can be used in the present invention to obtain the channel fading condition, i.e. channel estimation slot need not be set in the data frame and when the receiver 20 receives the data from the transmitter 10, the channel blind estimation will be used to obtain the channel fading condition and the channel fading condition will be processed by the received signal processor 210 to obtain the user feedback information. Then the insert of the channel estimation signal is avoided so as to prevent the waste of the frequency resource.

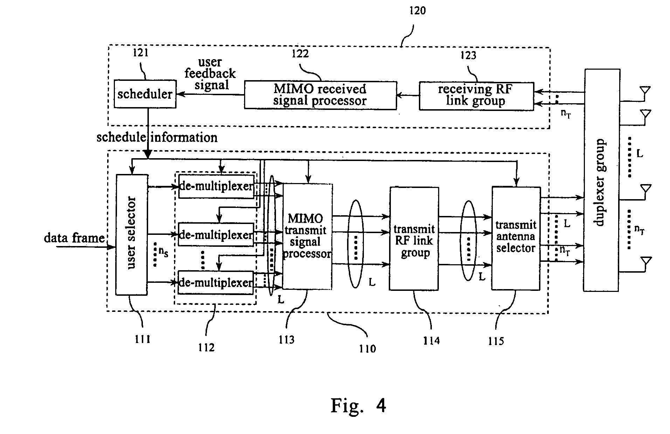

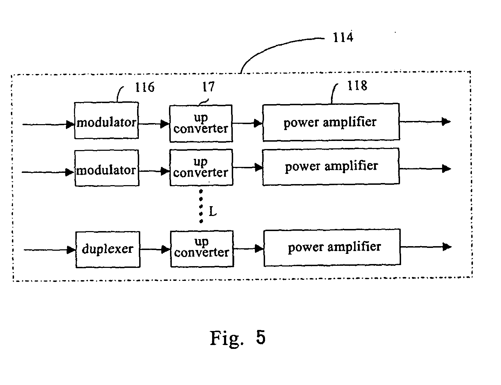

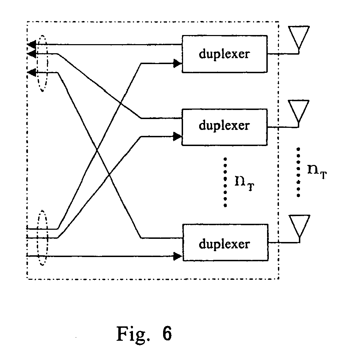

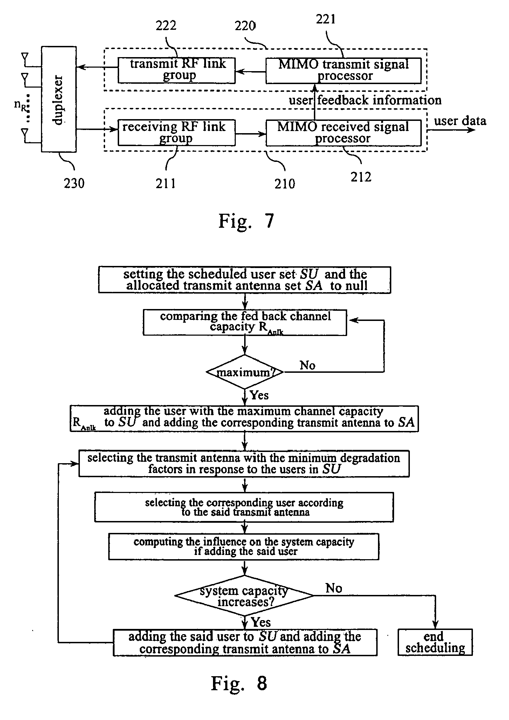

Figure 4 is a diagram further showing the architecture of the transmitter 10 of the MIMO communication system of the present invention. Figure 5 is a schematic diagram showing the architecture of the transmit RF link group of the transmitter 10 of the MIMO communication system of the present invention. Figure 6 is a schematic diagram showing the architecture of the duplexer group 130 of the transmitter 10. Figure 7 is a schematic diagram showing the architecture of the receiver 20 of the MIMO communication system of the present invention. Layered space time signal processing method is used in Figure 4 and Figure 7 to describe MIMO communication. Signal processing methods and apparatus disclosed by other current technologies, such as the space-time coding, can also be adopted to process the signals.

user data transmitting/receiving and scheduling process

transmitter 10

Figure 4 shows the said transmitter 10 includes a MIMO data processor 110, a MIMO scheduler 120, a duplexer group 130 and $n_T$ transmit antennas.

The said MIMO scheduler 120 includes a receiving RF link group 123, a MIMO received signal processor 122 and a scheduler 121. Wherein the receiving RF link group 123 has the same amount of receiving RF links as that of the transmitting antennas, which are used to convert the received feedback signal into the corresponding symbol stream. The MIMO received signal processor 122 produces the corresponding feedback signal of the user by space-time processing the said symbol stream. The scheduler 121 produces the scheduling information according to the feedback signal of the user, and then utilizes the said scheduling information to control the signal processing of the MIMO data processor 110. The said scheduling information includes the scheduled users, data streams that should be supported by each scheduled user and the transmit antennas adopted to transmit the data of the scheduled user.

The said MIMO data processor 110 includes a user selector 111, a plurality of parallel de-multiplexers 112, a MIMO transmit signal processor 113, a transmit RF link group 114 and a transmit antenna selector 115.

Wherein under the control of the scheduling information, the user selector 111 is used to select the users to be scheduled and to output the corresponding user data. Suppose the number is nS and nS is less than or equal to the number of the antennas $n_T$ of the transmitter 10.

Under the control of the scheduling information, nS de-multiplexers 112 are selected to divide the user data of the scheduled nS users, i.e. to divide the user data of the scheduled nS users into the corresponding symbol streams according to the data streams supported by each user (the number of the symbol streams is L), wehrein the maximum L is equal to the number $n_T$ of the transmit antennas.

Then the MIMO transmit signal processor 113 is used to process the L symbol streams as L layers from the de-multiplexer 112 and the way of processing is layered space time signal processing.

The transmit RF link group 114 is used to up-convert the L symbol streams after the layered space time signal processing into L corresponding RF signals.

Under the control of the scheduling information, the transmit antenna selector 115 selects the L antennas to be scheduled and transmits the L RF signals outputted from the transmit RF link group 114 to the scheduled L antennas through the duplexer group 130.

Finally, the RF signals are transmitted to the scheduled user through the scheduled L antennas. Here, the signals transmitted by the unselected antennas don't include any user data.

Figure 5 further describes the detailed architecture of the transmit RF link group 114, which includes a plurality of (suppose to be L for corresponding with the above) parellel transmit RF link groups. Each transmit RF link group includes a modulator 116, an up converter 117 and a power amplifier 118, which are connected in serial, and the said power amplifier can be a large power linear amplifier. The said L transmit RF link groups are used to convert the L symbol streams outputted from the MIMO transmit signal processor 113 respectively into the corresponding RF signals.

Figure 6 is a schematic diagram showing the architecture of the duplexer group 130 of the transmitter 10 of the first embodiment of the present invention. The said duplexer group 130 includes $n_T$ parallel duplexers. Every duplexer is connected to a corresponding transmit antenna and to a transmit antenna selector 115 and a receiving RF link group 123.

Receiver 20

Only a receiver 20 of one scheduled user is cited here for the purpose of illustration.

In Figure 7, the said receiver 20 includes a received signal processor 210, a feedback information processor 220, a duplexer group 230 and $n_R$ receiving antennas.

Wherein the said received signal processor 210 includes a receiving RF link group 211 and a MIMO received signal processor 212. The said feedback information processor 220 includes a MIMO transmit signal processor 221 and a transmit RF link group 222.

The said receiving RF link group 211 includes $n_R$ (the same amount as the receiving antennas) parallel receiving RF links (not shown in the figure) to down-convert and demodulate the received RF signals to obtain the corresponding symbol streams, which are to be transmitted to the MIMO received signal processor 212.

The said MIMO received signal processor 212 recovers the symbol streams to the original user data and outputs the data.

In order to illustrate the scheduling process of the present invention more specifically, please refer to Figure 8, which is the flow diagram showing the adaptive selection of the user to be scheduled according to the feedback information.

As shown in Figure 8, the process includes the following steps:

1) setting the scheduled user set *SU* and the allocated transmit antenna set *SA* to null;
2) comparing all the feedback channel capacity $R_{Anl_k}$ and selecting the user with the maximum channel capacity $R_{Anl_k}$ to be added to the scheduled user set *SU* and adding the corresponding transmit antenna to the allocated transmit antenna set *SA;*
3) selecting the transmit antenna with the minimum degradation factors to the selected user in the scheduled user set, then selecting the user with the maximum channel capacity corresponding to the said transmit antenna;
4) judging whether the adding of the said user has increased the system capacity, if the adding of the said user has increased the system capacity, adding the said user to the scheduled user set *SU* and at the same time, adding the corresponding transmit antenna to the allocated transmit antenna set *SA,* and then returning to the step 3); if the adding of the said user has reduced the system capacity, ending the said scheduling;

5) controlling the MIMO data processor 110 to divide the data streams of the scheduled user to independent symbol streams according to the final scheduled user set *SU* and the allocated transmit antenna set *SA* and to transmit them through the allocated transmit antennas.

the second embodiment

The second embodiment of the present invention is the adaptive scheduling MIMO communication system based on beamforming. Figure 1 to 3 in the first embodiment can be referred to get some idea about the architecture, adaptive scheduling method and the frame structure of the said MIMO communication system. Since the adaptive scheduling MIMO communication system in the second embodiment is based on beamforming, it is different from the adaptive scheduling MIMO communication system based on the antenna selection in the first embodiment in implementation. Next the MIMO communication system in the second embodiment will be illustrated in detail with reference to the drawings. Wherein, the same number stands for the same element of the same or similar functions.

Figure 1 shows the adaptive scheduling MIMO communication system based on beamforming includes a transmitter 10 (base station) and a plurality of receivers 20 (users). Figure 2 is a flow diagram showing the user scheduling. Figure 3 is a schematic diagram showing the structure of the adopted frame.

scheduling information obtaining process

Before the transmitter 10 transmits the user data signal, it will transmit the channel estimation signal to the receiver 20 in the form of transmit beams from $n_T$ transmit antennas through the duplexer group 130.

Suppose the transmit signal of the transmitter 10 is a $n_T$ dimension complex vector $\mathbf{x} \in C^{nT}$, the signal received by each receiver is a $n_R$ dimension complex vector $\mathbf{y}_k \in C^{nR}$ and there is a $n_R \times n_T$ dimension channel fading matrix between the transmitter 10 and the receiver 20. The said channel fading matrix and the transfer function are similar to (1) and (2) respectively and the difference is that the channel fading condition here takes into account the actual channel fading condition and the random complex vetor of the transmitter.

Similar to that in the first embodiment, channel blind estimation method can be used here to obtain the channel fading condition.

According to the channel fading condition, each receiver 20 can process the channel fading condition through the received signal processor 210 to obtain the user feedback information, which is transferred to the information processor 220. Wherein, the said feedback signal include: the group of best transmit beams $n_k$ for the said receiver, the equivalent channel gain $GN_k$ of each transmit beam in the said group $n_k$, the degradation factors $D_{k,i}$ caused by each transmit beam in the unselected group $Q_k$ of transmit beams to each transmit beam in the group $n_k$ .

$$ n_k = \arg \max_{n=1\ldots n_T} \left| H_k^{\,*} \mathbf{w}_n \right| \tag{5} $$

Wherein, $\mathbf{W}_n$ represents the random complex vector at the transmitter and $H_k$ represnents the channel fading matrix between the transmitter 10 and the receiver 20. The number of the best transmit beams in the group depends on the actual channel condition.

$$ Q_k = \arg \min_{S=\{s_1,\cdots s_{M-1}\,|\,s_i=1,\ldots,n_T\}} \left| H_k^{\,*} \sum_{n\in S} \mathbf{w}_n \right| \tag{6} $$

Wherein S represents all the probable sets of the (M-1) beams that are with lowest interference to the receiver from the $n_T$ beams.

And, the number of the transmit beams in the group of best transmit beams $n_k$, the number of the (M-1) transmit beams in the groups $Q_k$ that are with lowest interference to the receiver can be selected according to the actual channel condition, with the principle that the same transmit beam cannot be included in both the groups. In this embodiment, $Q_k$ is the group of all the unselected transmit beams.

$$\{D_{k,i}\} = \left\{ GN_k \middle/ \left|\mathbf{h}_k^{*}\mathbf{w}_i\right|^2 , i \in Q_k \right\}$$

(7)

The feedback information processor 220 processes the received user information and converts it into the feedback signal (RF signal) suitable for the MIMO communication system. The said feedback signal is fed back to the transmitter 10 through the feedback channel and the antenna of the receiver 20.

After the scheduler 121 of the transmitter 10 receives the feedback signal, the system scheduling begins. Since every receiver 20 has fed back the group of best transmit beams $n_k$ for the said receiver, the equivalent channel gain $GN_k$ of each transmit beam in the said group $n_k$, the degradation factors $D_{k,i}$ caused by each transmit beam in the unselected group $Q_k$ of transmit beams to each transmit beam in the group $n_k$, the scheduling process mainly includes:

1) setting the scheduled user set *SU* and the allocated transmit beam set *SB* to null;
2) comparing all the feedback equivalent channel gains $GN_k$ and selecting one user with the maximum equivalent channel gain $GN_k$ to be added to the scheduled user set *SU* and adding the corresponding transmit beam to the allocated transmit beam set *SB;*
3) finding the transmit beam with the minimum interference in the corresponding groups $Q_k$ to the user added in the scheduled user set and finding the user with the maximum equivalent channel gain corresponding to the said transmit beam with the minimum interference;
4) judging whether the adding of the said user has increased the system capacity according to the feedback degradation factor $D_{k,i}$, if the adding of the said user has increased the system capacity, adding the said user to the scheduled user set and at the same time, adding the corresponding transmit beam to the allocated transmit beam set; if the adding of the said user has reduced the system capacity, not adding the said user to the user scheduling set and ending scheduling;
5) after the adding of the said user, repeating step 3) and 4) successively until the end of scheduling;
6) finally, controlling the MIMO data processor 110 to divide the data streams of the scheduled user to independent symbol streams according to the final user scheduling set *SU* and the allocated transmit beam set *SB* and to transmit them by the allocated transmitting antennas.

The said scheduling method can schedule the user adaptively and make full use of the channel to provide the maximum channel capacity.

user data transmitting/receiving and scheduling process transmitter 10

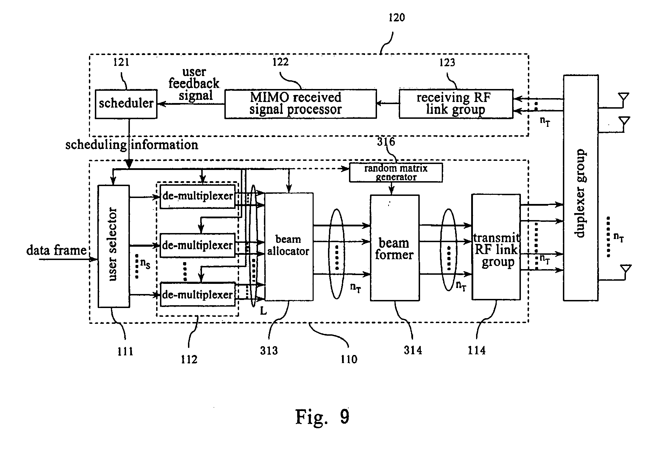

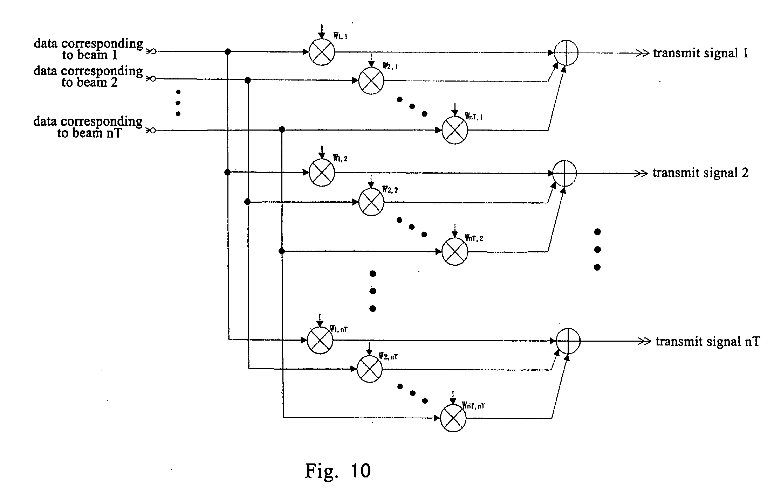

Figure 9 is a diagram further showing the architecture of the transmitter 10 of the MIMO communication system of the present invention. Figure 10 is a schematic diagram showing the architecture of the beamformer 314 of Figure 9. The architecture of the receiver 20 in the MIMO communication system in the present embodiment is the same as that in the first embodiment and Figure 7 can be referred to. Layered space time signal processing method is used in Figure 9 and Figure 7 to describe MIMO communication. Signal processing methods and apparatus disclosed by other current technologies, such as the space time coding, can also be adopted to process the signals.

Figure 9 shows the said transmitter 10 includes a MIMO data processor 110, a MIMO scheduler 120, a duplexer group 130 and $n_T$ transmit antennas.

The said MIMO scheduler 120 includes a receiving RF link group 123, a MIMO received signal processor 122 and a scheduler 121. Wherein the receiving RF link group 123 has the same amount of receiving RF links as that of the transmiting antennas, which are used to convert the received feedback signal into the corresponding symbol stream. The MIMO received signal processor 122 produces the corresponding feedback signal of the user by space-time processing the said symbol stream. The scheduler 121 produces the scheduling information according to the feedback signal, and then utilizes the said scheduling information to control the signal processing of the MIMO data processor 110. The said scheduling information includes the scheduled users, data streams that should be supported by each scheduled user and the transmit beams corresponding to each symbol stream.

The said MIMO data processor 110 includes a user selector 111, a plurality of parallel de-multiplexers 112, a beam allocator 313, a beamformer 314, a transmit RF link group 115 and a random matrix generator 316.

Wherein under the control of the scheduling information (according to "users to be scheduled" in the scheduling information), the user selector 111 is used to select the users to be scheduled and to output the corresponding user data. The number here is represented as nS and nS is less than or equal to the number of the antennas $n_T$ of the transmitter 10.

Under the control of the scheduling information, nS de-multiplexers 112 are selected to divide the user data of the scheduled nS users, i.e. to divide the user data of the scheduled nS users into L (nS≦L≦$^{n}T$) symbol streams according to the "symbol streams to transmit data for each scheduled user" in the scheduling information. L is the sum of the symbol streams allocated to all the scheduled users. Actually, each symbol stream of every user data is corresponding to one antenna at the receiver.

Then the beam allocator 113 is used to process the L symbol streams from the de-multiplexer 112 as L layers. The correspondence between the L symbol streams and the transmit beams is established according to the "the transmit beam corresponding to each symbol stream" and then the symbol streams are outputted. Figure 9 shows there are $n_T$ outputs but actually only L symbol streams are the user data while other ($n_T$- L) symbol streams don't occupy any user data.

The random matrix generator 316 is used to generate the random $n_T \times n_T$ dimension matrix (represented as $W_{i,j}$, wherein i and j are positive integers of 1-$n_T$) and to input the said $n_T \times n_T$ dimension matrix to the beamformer 314. The said random $n_T \times n_T$ dimension matrix can be the experience matrix or the channel matrix according to the channel information. The said random matrix generator 316 can receive the scheduling information from the scheduler 121 and generate the corresponding random matrix according to the channel information in the said scheduling information, or, can generate the experience matrix independent of the scheduler.

The beamformer 314 is used to perform weighted operation on the $n_T$ symbol streams (including the L symbol streams with the user data and the ($n_T$- L) symbol streams without any user data) from the beam allocator 313 according to the random $n_T \times n_T$ dimension matrix generated by the random matrix generator 316 and to generate $n_T$ transmit signals.

The transmitting RF link group 115 is used to receive the $n_T$ transmit signals from the beamformer 314 and to convert the said $n_T$ signals into the corresponding RF signals to be transmitted by the $n_T$ transmitting antennas at the duplexer group 130.

Figure 10 is an architecture diagram of the beamformer 314. Wherein the beamformer 314 is composed by $n_T \times n_T$ multiplier and $n_T$ adders. The said beamformer 1314 can generate $n_T$ transmit siganals corresponding to the $n_T$ symbol streams and each transmit signal is generated in approximately the same way. For simplification, the i$^{th}$ transmit signal will be chosen as an example to illustrate.

Firstly, for the i$^{th}$ transmit signal, every element (coefficient) in the i$^{th}$ line ($W_{1,i}$ to $W_{nT,i}$) of the $n_T \times n_T$ dimension matrix from the random matrix generator 316 is multiplied with each symbol stream. Then the results of the multiplying operation are added and the i$^{th}$ transmit signal is formed.

In the receiver 20 of Figure 7, the receiving RF link group 211 down-converts and demodulates the received RF signals to obtain the corresponding symbol streams, which are to be transmitted to the MIMO received signal processor 212. The said MIMO received signal processor 212 recovers the symbol streams to the original user data and outputs the data.

<half adaptive scheduling MIMO communication system>

The above adaptive scheduling MIMO communication system performs the adaptive scheduling of the user by effectively utilizing the current channel condition and can realize a comparatively higher system capacity at the current scheduling slot. However, the channel conditions in the neighbouring scheduling slots are not completely independent but have certain correlations such as time correlation. Thus, time correlation can be used to perform user scheduling.

Suppose the channel conditions in several slots are approximately the same, i.e. when the number of the optimal users can be scheduled in every slot is the same (suppose to be L), the system can find this optimal number by trying, i.e. schedules L users in the first scheduling slot and keeps the system capacity that can be realized by the said user. Then, try to schedule (L+1) users in the second scheduling slot and compare the system capacity realized by the (L+1) users with the kept system capacity realized by the L users in the previous scheduling slot. If the system capacity realized by the (L+1) users is larger than the kept system capacity realized by the L users in the previous scheduling slot, the system should be able to schedule (L+1) or more than (L+1) users. And continue to add one user in the next scheduling slot, i.e. schedule (L+2) users. If the system capacity realized by the (L+2) users is smaller than that realized by the (L+1) users in the previous scheduling slot, the system reaches the best scheduling condition. According to the above method, a half adaptive user scheduling method can be obtained by utilizing the time correlation characteristic of the channel.

Compared with the user number adjustable scheduling method cited in reference [2], the amount of the feedback information required by the half adaptive user scheduling is approximately the same. However, since the number of users scheduled is keeping changing, the feed-forward information is to be added to notify all the users that when they compute the feedback information, they should increase or reduce one scheduled user. For example, when the feed-forward information of the system is "1", it means the one user is to be added based on the number of the scheduled users computed in the previous scheduling slot, and when the feed-forward information of the system is "0", it means the one user is to be subtracted based on the number of the scheduled users computed in the previous scheduling slot, so that the feedback information can be computed.

Next the half adaptive user scheduling methods based on antenna selection and based on beamforming will be described respectively.

the third embodiment

The third embodiment will illustrate the half adaptive scheduling MIMO communication system and the half adaptive scheduling method based on antenna selection according to the present invention.

The architecture of the half adaptive scheduling MIMO communication system based on antenna selection is approximately the same with that of the adaptive scheduling MIMO communication system and the differences are: the half adaptive scheduling MIMO communication system is required to compare the communication capacity and to insert the feed-forward information (suppose to be 1 bit and of course can be multiple bits) in addition to produce scheduling information, so the scheduler is required to be configured correspondingly. The feed-forward information is inserted or multiplexed by a multiplexer ahead of the channel estimation signal (i.e. the data of the channel estimation signal increases the lengthen of the feed-forward information), and then the feed-forward information is transmitted together with the channel estimation signal in the same way.

In the current scheduling slot, suppose the number of users to be scheduled set by the system is L and the system capacity is C (L), the number of users to be computed is VL (VL=L initially). For simplification, every user is supposed to have one antenna. If one user has a plurality of antennas, it can be deduced from the condition that one user has one antenna.

Firstly, the scheduler creates a feed-forward information, which is supposed to be "1" and which means the system will inform all the users to compute the feedback information to schedule (VL+1) users. The scheduler inserts the said feed-forward information at the beginning of the channel estimation signal, i.e. the said feed-forward information becomes the first bit of the frame.

scheduling information obtaining process

The scheduling information obtaining process of the third embodiment is similar to that of the first embodiment. The difference is that the received signal processor 210 can obtain the following information according to the channel fading matrix:

(1) selecting a best group of transmit antennas $AnI_k$ for the said receiver 20 among all the $n_T$ transmit antennas, the number of the transmit antennas in the selected group of transmit antennas $AnI_k$ is the same as that of the receiving antennas of the said receiver 20;

(2) computing the signal-to-interference ratio (SIR) corresponding to each transmit antenna in the said group of $AnI_k$ ;

(3) finding the group $Q_k$ of the transmit antennas that are with lowest interference to each receiver. In this embodiment, suppose $Q_k$ is the group of transmit antennas decided by the number of users to be scheduled in the system. Since the best group of transmit antennas $AnI_k$ has already included one antenna which is the best for the said receiver, the initial number of the antennas in the said group $Q_k$ is VL-1. When the feed-forward information is "1", the number of antennas becomes VL in the scheduling slot which has the feed-forward information. On the contrary, when the feed-forward information is "0", the number of antennas becomes (VL-2) in the scheduling slot which has the feed-forward information. Suppose the receiver 20 has already been required by the feed-forward information "1" to compute the feedback information based on VL and the said group $Q_k$ includes VL antennas.

When every receiver 20 has $n_R$ receiving antennas, $n_R$ transmit antennas which are best for the said receiver will be included in the group of the best transmit antennas $AnI_k$ and the initial number of the antennas in the said group $Q_k$ is VL- $n_R$. For simplification, the following description will focus on receiver with one receiving antenna.

The received signal processor 210 transmits the above processed information to the information processor 220 as the user feedback information. The feedback information processor 220 processes the received user information and converts it into the feedback signal (RF signal) suitable for the MIMO communication system. The said feedback signal is fed back to the transmitter 10 through the feedback channel and the antenna of the receiver 20.

After receiving the said feedback signal, the antenna of transmitter 10 delivers it to the MIMO scheduler 120. Wherein, the receiving RF link group 123 down-converts and demodulates the received feedback signal to obtain the corresponding symbol stream. The MIMO received signal processor 122 produces the corresponding feedback signal of the user by space-time processing the said symbol stream and inputs the said signal to the scheduler 121.

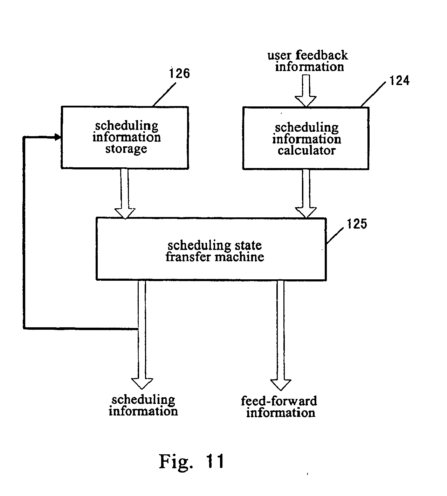

Figure 11 is a schematic diagram showing the architecture of the scheduler of the half adaptive scheduling MIMO communication system based on antenna selection of the third embodiment.

The scheduler 121 further includes a scheduling information calculator 124, a scheduling state transfer machine 125 and a scheduling information storage 126.

The scheduling information calculator 124 conducts the scheduling information (including the scheduled users, data streams that should be supported by each scheduled user and the transmit antenna adopted to transmit the data of the scheduled user) for current scheduling slot according to the user feedback signal from the received signal processor 122 and computes the system capacity promised by the said scheduling information.

Wherein the scheduling information generating process includes the following steps:

1) setting the scheduled user set $SU$ and the allocated transmit antenna set $SA$ to null;

2) comparing all the feedback SIRs $GNI_k$ and selecting the user with the maximum SIR $GNI_k$ to be added to the scheduled user set $SU$ and adding the corresponding transmit antenna to the allocated transmit antenna set $SA$;

3) finding the transmit antenna with the minimum interference in the corresponding groups $Q_k$ in response to the user in the scheduled user set and selecting the user with the maximum SIR according to the said transmit antenna to be added to the scheduled user set $SU$ and at the same time, adding the corresponding transmit antenna to the allocated transmit antenna set $SA$;

4) repeating step 3) until the end of user scheduling;

The system capacity can be easily computed during the process of generating the scheduling information.

The scheduling state transfer machine 125 compares the system capacity from the scheduling information calculator 124 with the system capacity read from the scheduling information storage 126. If the current system capacity is larger than the stored system capacity, the scheduling information and system capacity stored in the scheduling information storage 126 will be updated to the current scheduling information and system capacity and the current scheduling information will be utilized to perform user scheduling. If the current system capacity is less than the stored system capacity, update will not be performed and the previously stored scheduling information will be still used to perform user scheduling. Since the half adaptive scheduling MIMO communication system schedules based on the slow changes of the channel condition, the previous scheduling information can be used as the scheduling information for the current scheduling slot to perform user scheduling.

The scheduling state transfer machine 125 can generate the feed-forward information during the scheduling state transfer according to the scheduling state and control the scheduling state transfer. The detailed state transfer process will be illustrated later.

The communication and scheduling process of the half adaptive scheduling MIMO communication system of the third embodiment is the same with the first embodiment and will not be discussed here.

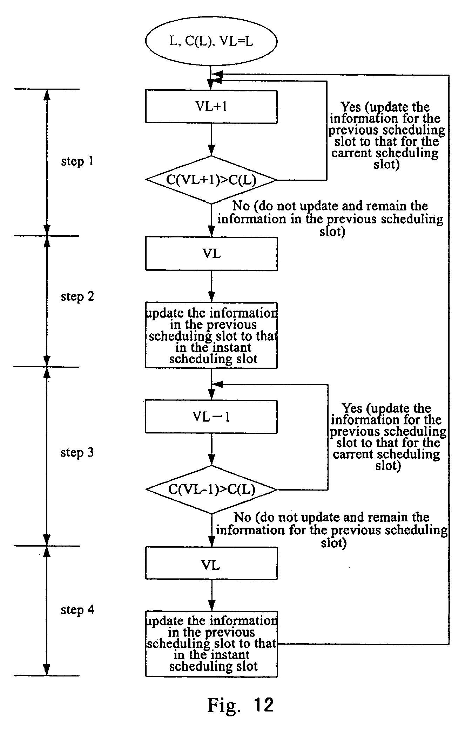

The scheduling state converstion process of the present embodiment will be illustrated with reference to Figure 12.

Suppose it is now the state of the previous scheduling slot during the following scheduling state transfer process, wherein the transmitter 10 has two values: the number of the scheduled users L and the system capacity C (L); the receiver 20 has the value VL=L.

Step 1

During the user scheduling, the scheduler 121 notifies all the receivers 20 to add 1 to VL by inserting the feed-forward information "1" in the frame. All the receivers 20 will compute the feedback information according to the (VL+1) and report the feedback information to the transmitter 10. The transmitter 10 can get the overall system capacity C (VL+1) and the user scheduling information according to the said feedback information and then the transmitter 10 will compare the computed system capacity C (VL+1) with the system capacity C (L) of the previous scheduling slot. If the current C (VL+1) is larger than C (L), the scheduler 121 will perform user scheduling according to the current user scheduling information, update C (L) to C (VL+1), L to (VL+1), the user scheduling information for the previous scheduling slot to the current user scheduling information and return to step 1.

On the contrary, if the current system capacity C (VL+1) is less than C (L), the scheduler 121 will perform user scheduling based on the initial system capacity C (L) and the scheduling state transfer process will proceed to step 2.

Step 2

The scheduler 121 notifies all the receivers 20 to subtract 1 from (VL+1). All the receivers 20 will compute the feedback information according to VL and report the feedback information to the transmitter 10. The transmitter 10 can get the overall system capacity C (VL) and the user scheduling information according to the said feedback information and then the transmitter 10 will perform user scheduling based on the computed user scheduling information. At the same time, the initial system capacity C (L) will be updated to current system capacity C (VL), L to VL, the user scheduling information for the previous scheduling slot to the current user scheduling information. Then the next step of the scheduling state transfer process will be performed.

Step 3

The scheduler 121 notifies all the receivers 20 to subtract 1 from VL. All the receivers 20 will compute the feedback information according to the current (VL-1) and report the feedback information to the transmitter 10. The transmitter 10 can get the overall system capacity C (VL-1) and the user scheduling information according to the said feedback information and then the transmitter 10 will compare the computed system capacity C (VL-1) with the system capacity updated in the previous step. If the current system capacity is larger than the updated one in the previous step, the scheduler 121 will perform user scheduling according to the current user scheduling information and update the number of the scheduled user, system capacity and user scheduling information updated in the previous step to the current number of the scheduled user, system capacity and user scheduling information. Then the scheduling state transfer process will return to step 3.
On the contrary, if the current system capacity is less than the updated one in the previous step, the scheduler 121 will perform user scheduling based on the user scheduling information updated in the previous step and then the scheduling state transfer process will proceed to step 4.

Step 4

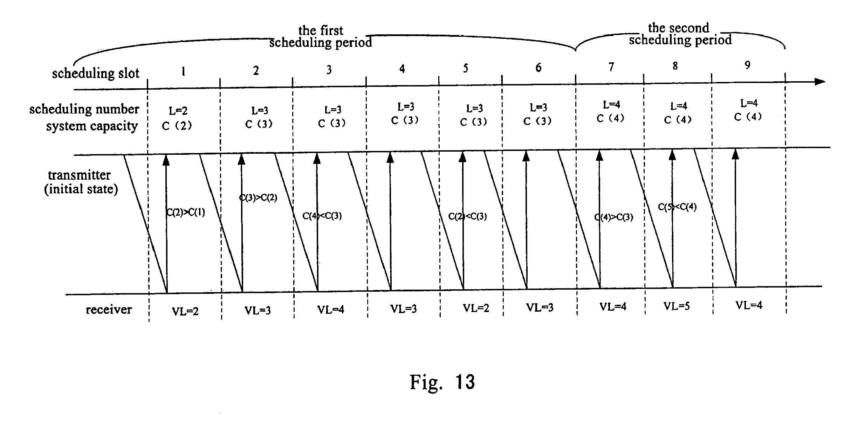

The scheduler 121 notifies all the receivers 20 to add 1 to (VL-1). All the receivers 20 will compute the feedback information according to the current VL and report the feedback information to the transmitter 10. The transmitter 10 can get the overall system capacity C (VL) and the user scheduling information according to the said feedback information and then the transmitter 10 will perform user scheduling based on the computed user scheduling information. Then updated number of the scheduled user, system capacity and user scheduling information in step 2 will be updated to the current number of the scheduled user, system capacity and user scheduling information. Then the scheduling state transfer process will return to step 1.
In order to understand the above scheduling state transfer process more specifically, please refer to the example disclosed in Figure 12.
Suppose the said half adaptive scheduling MIMO communication system is at two optimal scheduling states in the scheduling period shown in Figure 13. The optimal number of scheduled users is 3 at the first scheduling period and the optimal number of scheduled users is 4 at the second scheduling period. The above is just an assumption and the said half adaptive scheduling MIMO communication system may have a plurality of optimal scheduling states in all the scheduling periods. Suppose the initial state of the transmitter 10 includes: the number L of the scheduled users is 1, the system capacity C (L)= C (1). The receiver 20 initially computes the feedback information according to VL=L=1.
the first scheduling period
In the first scheduling slot, the transmitter 10 notifies the users to compute the feedback information according to VL=2. Since C (2) computed by the transmitter 10 according to the feedback information is larger than C (1), the transmitter 10 updates the initial number of scheduled users, system capacity and scheduling information to L=2, C (2) and the scheduling information for the current scheduling slot respectively and then the user scheduling information for the current scheduling slot is used to perform user scheduling.
In the second scheduling slot, the transmitter 10 notifies the users to compute the feedback information according to VL=3. Since C (3) computed by the transmitter 10 according to the feedback information is larger than C (2), the transmitter 10 updates the number of scheduled users, system capacity and scheduling information for the previous scheduling slot to L=2, C (2) and the scheduling information for the current scheduling slot respectively and then the user scheduling information for the current scheduling slot is used to perform user scheduling.
In the third scheduling slot, the transmitter 10 notifies the users to compute the feedback information according to VL=4. Since C (4) computed by the transmitter 10 according to the feedback information is less than C (3), the transmitter 10 will not update the number of scheduled users, system capacity and scheduling information and then the user scheduling information for the previous scheduling slot is used to perform user scheduling.
From the first to the third scheduling slot, the system keeps repeating the operation in step 1.
In the fourth scheduling slot, the transmitter 10 notifies the users to compute the feedback information according to VL=3 (i.e. with 1 subtracted from the VL in the third scheduling slot). And the transmitter 10 updates the number of scheduled users, system capacity and scheduling information for the previous scheduling slot to the number of scheduled users, system capacity and scheduling information for the current scheduling slot respectively and then the user scheduling information for the current scheduling slot is used to perform user scheduling.
In the fourth scheduling slot, the system is perfoming the operation in step 2.
In the fifth scheduling slot, the transmitter 10 notifies the users to compute the feedback information according to VL=2 (i.e. with 1 subtracted from the VL in the fourth scheduling slot). Since C (2) computed by the transmitter 10

according to the feedback information is less than C (3), the transmitter 10 will not update the number of scheduled users, system capacity and scheduling information and then the user scheduling information for the previous scheduling slot is used to perform user scheduling.

In the fifth scheduling slot, the system is perfoming the operation in step 3.

In the sixth scheduling slot, the transmitter 10 notifies the users to compute the feedback information according to VL=3 (i.e. with 1 added to the VL in the fifth scheduling slot). And the transmitter 10 updates the number of scheduled users, system capacity and scheduling information for the previous scheduling slot to the number of scheduled users, system capacity and scheduling information for the current scheduling slot respectively and then the user scheduling information for the current scheduling slot is used to perform user scheduling.

In the sixth scheduling slot, the system is perfoming the operation in step 4.

the second scheduling period

In the seventh scheduling slot, the transmitter 10 notifies the users to compute the feedback information according to VL=4. Since C (4) computed by the transmitter 10 according to the feedback information is larger than C (3), the transmitter 10 updates the number of scheduled users, system capacity and scheduling information for the previous scheduling slot to the number of scheduled users, system capacity and scheduling information for the current scheduling slot respectively and then the user scheduling information for the current scheduling slot is used to perform user scheduling.

In the eighth scheduling slot, the transmitter 10 notifies the users to compute the feedback information according to VL=5. Since C (5) computed by the transmitter 10 according to the feedback information is less than C (4), the transmitter 10 will not update the number of scheduled users, system capacity and scheduling information and then the user scheduling information for the previous scheduling slot is used to perform user scheduling.

In the seventh and eighth scheduling slots, the system is performing the operation in step 1.

In the ninth scheduling slot, the transmitter 10 notifies the users to compute the feedback information according to VL=4. And the transmitter 10 updates the number of scheduled users, system capacity and scheduling information for the previous scheduling slot to the number of scheduled users, system capacity and scheduling information for the current scheduling slot respectively and then the user scheduling information for the current scheduling slot is used to perform user scheduling.

The above half adaptive scheduling MIMO communication system and half adaptive scheduling method show the system can track the optimal scheduling state (adaptive scheduling state) of the system at any time so as to get the user scheduling state (including the number of users and system capacity) approximately corresponding to the adaptive scheduling MIMO communication system; in addtion, since the feedback information is comparatively less than that of the adaptive scheduling, the amount of the information to be processed is reduced accordingly.

It should be noted that one frame can be a scheduling slot and the neighbouring several frames can be a scheduling slot also. When the neighbouring several frames is adopted as a scheduling slot, these frames will schedule according to the same scheduling information.

the fourth embodiment

The fourth embodiment of the present invention is the half adaptive scheduling MIMO communication system based on beamforming, whose architecture is approximately similar to that of the adaptive scheduling MIMO communication system of the second embodiment. The differences are:

(1) The said feedback information includes: the group of the best transmit beams of the said receiver 20, the signal-to-interference ratio (SIR) corresponding to each transmit beam in the said group of the best transmit beams and the group of transmit beams that are with lowest interference to each receiver. The number of the transmit beams in the said group of the best transmit beams is the same with the number of the receiving antennas of the said receiver 20.

(2) The scheduling information generated according to the user feedback information includes the scheduled users, data streams that should be supported by each scheduled user and the transmit beam adopted to transmit the data of the scheduled user.

(3) Since the half adaptive scheduling MIMO communication system is required to generate scheduling information, to compare the communication capacity and to insert 1-bit feed-forward information in the frame transmitted in every scheduling slot, the scheduler 121 needs to be configured similarly as in the third embodiment.

In addition, the architecture of the scheduler in the half adaptive scheduling MIMO communication system based on beamforming in the fourth embodiment of the present invention is the same with that in the third embodiment. The feedback information of the two is approximately the same, so are the process manner of the scheduler, the scheduling process and the state transfer. The fourth embodiment simply changes the transmit antenna in the third embodiment to the corresponding transmit beam. So the detailed architecture and user scheduling method will not be illustrated here.

**Claims**

1. A MIMO communication system, includes:

a transmitter (10) that is configured to transmit the data frame including at least the channel estimation signal and the user data; and

a receiver (20) that is configured to receive the data frame from the transmitter (10) and to produce the corresponding feedback signal according to the channel fading matrix between the transmitter (10) and the receiver (20) and to recover the user data, which is **characterized in that**,

the said transmitter (10) includes:

a duplexer group (130) and the corresponding mounted transmiting antennas, which are used to transmit the data frames and to receive the feedback information from the receiver (20);

a MIMO scheduler (120), which is used to produce scheduling information according to the user feedback information;

a MIMO data processor (110), which is used to perform space time signal processing for the user data according to the scheduling information, and

the said receiver (20) includes:

a duplexer group (230) and the corresponding mounted receiving antennas, which are used to receive data frames from the transmitter (10) and to transmit user feedback signals;

a received signal processor (210), which is used to produce the feedback informaiton of the user and to recover the user data according to the channel fading matrix between the transmitter (10) and the receiver (20);

a feedback information processor (220), which is used to convert the feedback information of the user into the corresponding feedback signal.

2. The MIMO communication system of claim 1, which is **characterized in that**,
the said MIMO scheduler (120) includes:

a receiving RF link group (123), which is used to down-convert and demodulate the received RF signals to obtain the corresponding symbol streams;

a MIMO received signal processor (122), which is used to perform space time signal processing on the obtained symbol stream and to obtain the corresponding uer feedback information; and

a scheduler (121), which is used to produce scheduling information according to the said user feedback information and to control the signal processing of the data processor (110) according to the said scheduling information.

3. The MIMO communication system of claim 2, which is **characterized in that**,
the user feedback information produced by the received signal processor (210) according to the channel fading matrix between the transmitter (10) and the receiver (20) includes: the group of the best transmit antennas of the said receiver (20), the channel capacity provided by each antenna in the said group of antennas to the said receiver (20) and the degradation factors caused by each unselected transmit antenna to each in the group of the best transmit antennas;

the scheduling information produced by the said scheduler (121) according to the said user feedback information includes: the scheduled users, data streams that should be supported by each scheduled user and the transmit antenna adopted to transmit the data of the scheduled user.

4. The MIMO communication system of claim 3, which is **characterized in that**,
the said MIMO data processor (110) includes:

a user selector (111), which is used to select the user data of the scheduled user according to the scheduling information;

a plurality of parallel de-multiplexers (112), which are used to divide the user data of the scheduled users and to output a plurality of symbol streams;

a MIMO transmit signal processor (113), which is used to perform layered space time signal processing on the plurality of symbol streams outputted from the de-multiplexers (112);

a transmit RF link group (114), which is used to up-convert the plurality of symbol streams processed by the MIMO transmit signal processor (113) into the corresponding RF signals; and
a transmit antenna selector (115), which is used to select the transmit antennas according to the scheduling information and to transmit the RF signals corresponding to the user data through the transmit antenna.

5. The MIMO communication system of claim 4, which is **characterized in that**,
the said received signal processor (210) includes:

a receiving RF link group (211), which is used to down-convert and demodulate the received RF signals to obtain the corresponding symbol streams;
a MIMO received signal processor (212), which is used to produce the corresponding feedback information of the user according to the said symbol streams, to recover and to output the user data; and
the said feedback information processor (220) includes:

a MIMO transmit signal processor (221), which is used to convert the user feedback information into the feedback signal;
a transmitting RF link group (222), which is used to up-convert the said feedback signals into the corresponding RF signals.

6. The MIMO communication system of claim 4 or 5, which is **characterized in that**,
the said transmit RF link group (114) includes a plurality of parallel transmit RF links that up-convert the plurality of symbol streams outputted from the MIMO transmit signal processor (113) into the corresponding RF signals, and every transmit RF link includes a modulator (116), an up converter (117) and a power amplifier (118), which are connected in serial.

7. The MIMO communication system of claim 6, which is **characterized in that**, the said power amplifier (118) is a large power linear amplifier.

8. The MIMO communication system of claim 2, which is **characterized in that**,
the user feedback information produced by the received signal processor (210) according to the channel fading matrix between the transmitter (10) and the receiver (20) includes: the group of best transmit beams for the said receiver, the equivalent channel gain of each transmit beam in the said group, the degradation factors caused by each transmit beam in the unselected group of transmit beams to the best transmit beam;
the scheduling information produced by the said scheduler (121) according to the said user feedback information includes: the scheduled users, data streams that should be supported by each scheduled user and the transmit beam adopted to transmit each data stream.

9. The MIMO communication system of claim 8, which is **characterized in that**,
the said MIMO data processor (110) includes:

a user selector (111), which is used to select the user data of the scheduled user according to the scheduling information;
a plurality of parallel de-multiplexers (112), which are used to divide the user data of the scheduled users and to output a plurality of symbol streams;
a beam allocator (313), which is used to process the symbol streams outputted from the de-multiplexer (112) and to establish the association between each symbol stream and the corresponding transmit beam;
a random matrix generator (316), which is used to generate and to output the random matrix;
a beamformer (314), which is used to generate a plurality of transmit signals according to the symbol streams from the beam allocator (313) which have already established the association with the corresponding transmit beams and according to the random matrix from the random matrix generator (316); and
a transmit RF link group (114), which is used to receive a plurality of transmit signals from the beamformer (314) and to up-convert the plurality of transmit signals into the corresponding RF signals.

10. The MIMO communication system of claim 9, which is **characterized in that**,
the beamformer (314) includes a plurality of multipliers and adders, generates a plurality of transmit signals corresponding to the transmit beams.

11. The MIMO communication system of claim 10, which is **characterized in that**,
the said transmit RF link group (114) includes a plurality of parallel transmit RF links that up-convert the plurality of transmit signals outputted from the beamformer (314) into the corresponding RF signals, and every transmit RF link includes a modulator (116), an up converter (117) and a power amplifier (118), which are connected in serial.

12. The MIMO communication system of claim 11, which is **characterized in that**, the said received signal processor (210) includes:

a receiving RF link group (211), which is used to down-convert and demodulate the received RF signals to obtain the corresponding symbol streams;

a MIMO received signal processor (212), which is used to produce the corresponding feedback information of the user according to the said symbol stream , to recover and to output the user data; and the said feedback information processor (220) includes:

a MIMO transmit signal processor (221), which is used to convert the user feedback information into the feedback signal;

a transmitting RF link group (222), which is used to up-convert the said feedback signals into the corresponding RF signals.

13. The MIMO communication system of claim 2, which is **characterized in that**, the feedback information produced by the received signal processor (210) includes: the group of the best transmit antennas of the said receiver (20), the signal-to-interference ratio corresponding to each transmit antenna in the said group and the group of transmit antennas that are with lowest interference to each receiver. the scheduling information produced by the said scheduler (121) according to the said user feedback information includes: the scheduled users, data streams that should be supported by each scheduled user and the transmit antenna adopted to transmit the data of the scheduled user.

14. The MIMO communication system of claim 13, which is **characterized in that**, the number of the transmit antennas in the said group of the best transmit antennas of the said receiver (20) is the same with the number of the receiving antennas of the said receiver (20).

15. The MIMO communication system of claim 14, which is **characterized in that**, the said scheduler (121) includes:

a scheduling information calculator (124), which conducts the scheduling information for current scheduling slot according to the user feedback information from the received signal processor (122) and computes the system capacity promised by the said scheduling information;

a scheduling information storage (126), which is used to store the scheduling information and the system capacity of the previous scheduling slot;

a scheduling state transfer machine (125), which compares the system capacity of the current scheduling slot from the scheduling information calculator (124) with the system capacity of the previous scheduling slot read from the scheduling information storage (126),

if the current system capacity is larger than the stored system capacity, the scheduling information and system capacity stored in the scheduling information storage (126) will be updated to the current scheduling information and system capacity and the current scheduling information will be utilized to perform user scheduling,

if the current system capacity is less than the stored system capacity, update will not be performed and the scheduling information for the previous scheduling slot will be still used to perform user scheduling, and

the said scheduling state transfer machine (125) accomplishes the transfer of the scheduling state and sends the feed-forward information before the channel estimation signal to notify the received signal processor (210) to increase or reduce the number of the transmit antennas in the group of transmit antennas that are with lowest interference to each receiver in the user feedback information.

16. The MIMO communication system of claim 15, which is **characterized in that**, the said MIMO data processor (110) includes:

a user selector (111), which is used to select the user data of the scheduled user according to the scheduling information;

a plurality of parallel de-multiplexers (112), which are used to divide the user data of the scheduled users according to the scheduling information and to output a plurality of symbol streams;

a MIMO transmit signal processor (113), which is used to perform layered time-space signal processing on the plurality of symbol streams outputted from the de-multiplexers (112) according to the scheduling information;

a transmit RF link group (114), which is used to up-convert the plurality of symbol streams processed by the MIMO transmit signal processor (113) into the corresponding RF signals; and

a transmit antenna selector (115), which is used to select the transmit antennas according to the scheduling information and to transmit the RF signals corresponding to the user data through the transmit antenna.

**17.** The MIMO communication system of claim 16, which is **characterized in that**,

the said transmit RF link group (114) includes a plurality of parallel transmit RF links that up-convert the plurality of symbol streams outputted from the MIMO transmit signal processor (113) into the corresponding RF signals, and every transmit RF link includes a modulator (116), an up converter (117) and a power amplifier (118), which are connected in serial.

**18.** The MIMO communication system of claim 17, which is **characterized in that**, the said power amplifier (118) is a large power linear amplifier.

**19.** The MIMO communication system of claim 18, which is **characterized in that**,

the said received signal processor (210) includes:

a receiving RF link group (211), which is used to down-convert and demodulate the received RF signals to obtain the corresponding symbol streams;

a MIMO received signal processor (212), which is used to produce the corresponding feedback information of the user according to the feed-forward information in the said symbol streams and channel fading matrix, to recover and to output the user data; and

the said feedback information processor (220) includes:

a MIMO transmit signal processor (221), which is used to convert the user feedback information into the feedback signal;

a transmitting RF link group (222), which is used to up-convert the said feedback signals into the corresponding RF signals.

**20.** The MIMO communication system of claim 2, which is **characterized in that**,

the said feedback information produced by the received signal processor (210) includes the group of the best transmit beams of the said receiver (20), the signal-to-interference ratio corresponding to each transmit beam in the said group of the best transmit beams and the group of transmit beams that are with lowest interference to each receiver; the scheduling information produced by the said scheduler (121) according to the said user feedback information includes: the scheduled users, data streams that should be supported by each scheduled user and the transmit beam adopted to transmit the data of the scheduled user.

**21.** The MIMO communication system of claim 20, which is **characterized in that**,

The number of the transmit beams in the said group of the best transmit beams of the said receiver (20) is the same with the number of the receiving antennas of the said receiver (20).

**22.** The MIMO communication system of claim 21, which is **characterized in that**, the said scheduler (121) includes:

a scheduling information calculator (124), which conducts the scheduling information for current scheduling slot according to the user feedback information from the received signal processor (122) and computes the system capacity promised by the said scheduling information;

a scheduling information storage (126), which is used to store the scheduling information and the system capacity of the previous scheduling slot;

a scheduling state transfer machine (125), which compares the system capacity of the current scheduling slot from the scheduling information calculator (124) with the system capacity of the previous scheduling slot read from the scheduling information storage (126),

if the current system capacity is larger than the stored system capacity, the scheduling information and system capacity stored in the scheduling information storage (126) will be updated to the current scheduling information and system capacity and the current scheduling information will be utilized to perform user scheduling,

if the current system capacity is less than the stored system capacity, update will not be performed and the scheduling information for the previous scheduling slot will be still used to perform user scheduling, and

the said scheduling state transfer machine (125) accomplishes the transfer of the scheduling state and sends the feed-forward information before the channel estimation signal to notify the received signal processor (210) to increase or reduce the number of the transmit beams in the group of transmit beams that are with lowest interference to each receiver in the user feedback information.

**23.** The MIMO communication system of claim 22, which is **characterized in that**, the said MIMO data processor (110) includes:

a user selector (111), which is used to select the user data of the scheduled user according to the scheduling information;
a plurality of parallel de-multiplexers (112), which are used to divide the user data of the scheduled users and to output a plurality of symbol streams;
a beam allocator (313), which is used to process the symbol streams outputted from the de-multiplexer (112) and to establish the association between each symbol stream and the corresponding transmit beam;
a random matrix generator (316), which is used to generate and to output the random matrix;
a beamformer (314), which is used to generate a plurality of transmit signals according to the symbol streams from the beam allocator (313) which have already established the association with the corresponding transmit beams and according to the random matrix from the random matrix generator (316); and
a transmit RF link group (114), which is used to receive a plurality of transmit signals from the beamformer (314) and to up-convert the plurality of transmit signals into the corresponding RF signals.

**24.** The MIMO communication system of claim 23, which is **characterized in that**, the beamformer (314) is composed of a plurality of multipliers and adders, generates a plurality of transmit signals corresponding to the transmit beams.

**25.** The MIMO communication system of claim 24, which is **characterized in that**, the said transmit RF link group (114) includes a plurality of parallel transmit RF links that up-convert the plurality of transmit signals outputted from the beamformer (314) into the corresponding RF signals, and every transmit RF link includes a modulator (116), an up converter (117) and a power amplifier (118), which are connected in serial.

**26.** The MIMO communication system of claim 25, which is **characterized in that**, the said received signal processor (210) includes:

a receiving RF link group (211), which is used to down-convert and demodulate the received RF signals to obtain the corresponding symbol streams;
a MIMO received signal processor (212), which is used to produce the corresponding feedback information of the user according to the said symbol stream , to recover and to output the user data; and
the said feedback information processor (220) includes:

a MIMO transmit signal processor (221), which is used to convert the user feedback information into the feedback signal;
a transmitting RF link group (222), which is used to up-convert the said feedback signals into the corresponding RF signals.

**27.** A user scheduling method of the MIMO communication system, which includes the following steps:

(a) the receiver produces the feedback information according to the channel fading condition between the transmit antenna and the receiving antenna and feeds back the said feedback information to the transmitter;
(b) the transmitter receives the said feedback information, produces the scheduling information according to the said feedback information and schedules the user according to the said scheduling information;

wherein the said feedback information include the group of the best transmit antennas of the said receiver, the channel capacity provided by each antenna in the said group of antennas to the said receiver and the degradation factors caused by each unselected transmit antenna to each in the group of the best transmit antennas; the said scheduling information includes the scheduled users, data streams that should be supported by each scheduled user and the transmit antenna adopted to transmit the data of the scheduled user.

**28.** The user scheduling method of claim 27, wherein step (b) includes the following steps:

1) setting the scheduled user set and the allocated transmit antenna set to null;

2) comparing all the feedback channel capacity information and selecting the user with the maximum channel capacity information to be added to the scheduled user set and adding the corresponding transmit antenna to the allocated transmit antenna set;

3) selecting the transmit antenna with the minimum degradation factors to the selected user in the scheduled user set, then selecting the user with the maximum channel capacity corresponding to the said transmit antenna;

4) judging whether the adding of the said user has increased the system capacity, if the adding of the said user has increased the system capacity, adding the said user to the scheduled user set and at the same time, adding the corresponding transmit antenna to the allocated transmit antenna set, and then returning to the step 3); if the adding of the said user has reduced the system capacity, ending the said scheduling;

5) performing user scheduling according to the final scheduled user set and the allocated antenna set.

29. A user scheduling method of the MIMO communication system, which includes the following steps:

(a) the receiver produces the feedback information according to the channel fading condition between the transmit antenna and the receiving antenna and feeds back the said feedback information to the transmitter;

(b) the transmitter receives the said feedback information, produces the scheduling information according to the said feedback information and schedules the user according to the said scheduling information;

Wherein the said feedback signal includes the group of best transmit beams for the said receiver, the equivalent channel gain of each transmit beam in the said group, the degradation factors caused by each transmit beam in the unselected group of transmit beams to the best transmit beam; the said scheduling information includes the scheduled users, data streams that should be supported by each scheduled user and the transmit beam adopted to transmit each data stream.

30. The user scheduling method of claim 29, wherein step (b) includes the following steps:

1) setting the scheduled user set and the allocated transmit beam set to null;

2) comparing all the fed back equivalent channel gains and selecting the user with the maximum equivalent channel gain to be added to the scheduled user set and adding the corresponding transmit beam to the allocated transmit beam set;

3) selecting the transmit beam with the minimum degradation factors to the selected user in the scheduled user set, then selecting the user with the maximum equivalent channel gain corresponding to the said transmit beam;

4) judging whether the adding of the said user has increased the system capacity, if the adding of the said user has increased the system capacity, adding the said user to the scheduled user set and at the same time, adding the corresponding transmit beam to the allocated transmit beam set; if the adding of the said user has reduced the system capacity, not adding the said user to the user scheduling set and ending scheduling;

5) after the adding of the said user, repeating step 3) and 4) successively until the end of scheduling;

6) performing user scheduling according to the final scheduled user set and the allocated antenna set.

31. A user scheduling method of the MIMO communication system, which includes the following steps:

(a) the receiver produces the feedback signal according to the channel fading condition between the transmit antenna and the receiving antenna and feeds back the said feedback signal to the transmitter;

(b) the transmitter receives the said feedback signal, produces the scheduling information according to the said feedback signal and schedules the user according to the said scheduling information,

wherein, the said feedback signal includes the group of the best transmit antennas of the said receiver and the signal-to-interference ratio corresponding to each transmit antenna in the said group of the best transmit beams, the group of transmit antennas that are with lowest interference to each receiver; the said scheduling information includes the scheduled users, data streams that should be supported by each scheduled user and the transmit antenna adopted to transmit the data of the scheduled user.

32. The user scheduling method of claim 31, wherein step (b) includes the following steps:

1) setting the scheduled user set and the allocated transmit antenna set to null;

2) comparing all the fed back SIRs and selecting the user with the maximum SIR to be added to the scheduled user set and adding the corresponding transmit antenna to the allocated transmit antenna set;

3) finding the transmit antenna with the minimum interference in the corresponding group of transmit antennas that are with lowest interference to each receiver in response to the user in the scheduled user set and selecting the user with the maximum SIR according to the said transmit antenna to be added to the scheduled user set and at the same time, adding the corresponding transmit antenna to the allocated transmit antenna set;
4) repeating step 3) until f the end of scheduling.

**33.** A user scheduling method of the MIMO communication system, which includes the following steps:

(a) the receiver produces the feedback information according to the channel fading condition between the transmit antenna and the receiving antenna and feeds back the said feedback inforamtion to the transmitter;
(b) the transmitter receives the said feedback information, produces the scheduling information according to the said feedback information and schedules the user according to the said scheduling information,

Wherein, the said feedback signal includes the group of the best transmit beams of the said receiver, the signal-to-interference ratio (SIR) corresponding to each transmit beam in the said group of the best transmit beams and the group of transmit beams that are with lowest interference to each receiver; the said scheduling information includes the scheduled users, data streams that should be supported by each scheduled user and the transmit beam adopted to transmit the data of the scheduled user.

**34.** The user scheduling method of claim 33, wherein step (b) includes the following steps:

1) setting the scheduled user set and the allocated transmit antenna set to null;
2) comparing all the fed back SIRs and selecting the user with the maximum SIR to be added to the scheduled user set and adding the corresponding transmit antenna to the allocated transmit antenna set;
3) finding the transmit beam with the minimum interference in the corresponding group of transmit antennas that are with lowest interference to each receiver in response to the user in the scheduled user set and selecting the user with the maximum SIR according to the said transmit beam to be added to the scheduled user set and at the same time, adding the corresponding transmit beam to the allocated transmit beam set;
4) repeating step 3) until the end of scheduling.

**35.** The user scheduling method of claim 32 or 34, which further includes the following steps:

Step 1: conducting the current user scheduling information according to the obtained feeback information and computing the system capacity, comparing the system capacity of the current scheduling slot with that of the previous scheduling slot, if the system capacity of the current scheduling slot is larger than that of the previous slot, the system capacity and scheduling information of the previous slot are updated to those in the current scheduling slot and the current scheduling information is utilized to perform user scheduling, at the same time, a feed-forward information is sent to the receiver in the next scheduling slot to notify the receiver to add to the feedback information the transmit antennas/beams in the transmit antenna/beam group that are with lowest interference to each receiver, and then return to step 1,
if the current system capacity is less than that of the previous slot, update will not be performed and the previous scheduling information will be utilized to perform user scheduling and then go to step 2;
step 2: sending the feed-forward information to the receiver and notifying the receiver to reduce in the feedback information the number of the transmit antennas/beams in the transmit antenna/beam group that are with lowest interference to each receiver, then updating the scheduling information and system capacity of the previous scheduling slot to those produced in current scheduling slot, and the current scheduling information is utilized to perform user scheduling and then to to step 3;
step 3: sending the feed-forward information to the receiver and notifying the receiver to reduce in the feedback information the number of the transmit antennas/beams in the transmit antenna/beam group that are with lowest interference to each receiver, then computing the current system capacity according to the scheduling information and comparing the current system capacity with that of previous scheduling slot, if the system capacity of the current scheduling slot is larger than that of previous scheduling slot, the system capacity and scheduling information are updated to those of the current scheduling slot and the current scheduling information is utilized to perform user scheduling, and then returning to step 3,
if the current system capacity is less than that of previous scheduling slot, the scheduling information in the previous scheduling slot will be utilized to perform user scheduling and then go to step 4;
step 4: sending the feed-forward information to the receiver and notifying the receiver to add in the feedback information the number of the transmit antennas/beams in the transmit antenna/beam group that are with lowest interference to each receiver, then updating the scheduling information and system capacity to those produced in the current scheduling slot, and then the current scheduling information being utilized to perform user scheduling, and then go to step 1.

Fig. 1

Fig. 2

Fig. 3

EP 1 742 382 A2

Fig. 4

Fig. 5

Fig. 6

222    220    221

transmit RF link group ← MIMO transmit signal processor

n_R ... duplexer

user feedback information

receiving RF link group → MIMO received signal processor → user data

230    211    210    212

Fig. 7

setting the scheduled user set SU and the allocated transmit antenna set SA to null

comparing the fed back channel capacity R_Anlk

maximum? — No

Yes

adding the user with the maximum channel capacity R_Anlk to SU and adding the corresponding transmit antenna to SA

selecting the transmit antenna with the minimum degradation factors in response to the users in SU

selecting the corresponding user according to the said transmit antenna

computing the influence on the system capacity if adding the said user

system capacity increases? — No

Yes

adding the said user to SU and adding the corresponding transmit antenna to SA

end scheduling

Fig. 8

Fig. 9

data corresponding to beam 1
data corresponding to beam 2
data corresponding to beam nT

$W_{1,1}$ $W_{2,1}$ $W_{nT,1}$ → transmit signal 1

$W_{1,2}$ $W_{2,2}$ $W_{nT,2}$ → transmit signal 2

$W_{1,nT}$ $W_{2,nT}$ $W_{nT,nT}$ → transmit signal nT

Fig. 10

Fig. 11

Fig. 12

Fig. 13

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. J. MAZZARESE ; W. A. KRZYMIEN.** *High throughput downlink cellular packet data access with multiple antennas and multiuser diversity,* 2003
- **D. AKTAS ; H. E. GAMAL.** *Multiuser scheduling for MIMO wireless systems,* 2003

- **P. VISWANATH ; D. N. C. TSE ; R. LAROIA.** Opportunistic beamforming using dumb Anntennas. *IEEE Trans. Infor. Theory,* June 2002, vol. 48 (6), 1277-1294
- **R. LAROIA ; J. LI ; S. RANGAN ; M. SRINIVASAN.** Enhanced Opportunistic beamforming. *IEEE VTC2003-Fall,* October 2003, vol. 3, 1762-1766